# EUROPEAN PATENT APPLICATION

(11) **EP 4 560 809 A1**
(43) Date of publication of application: **28.05.2025**
(21) Application number: 22953771.7
(22) Date of filing: 13.09.2022
(51) Int. Cl.: H01M 50/242

(54) **BATTERY CELL, BATTERY AND ELECTRICAL DEVICE**

(30) Priority: 01.08.2022 CN 202221997296 U
(71) Applicant: Contemporary Amperex Technology Co., Limited, Ningde, Fujian 352100 (CN)
(72) Inventor: HOU, Mengmeng, Ningde, Fujian 352100 (CN); YAN, Xiaojie, Ningde, Fujian 352100 (CN); ZHU, Jiawei, Ningde, Fujian 352100 (CN)
(74) Representative: Gong, Jinping
(86) International application number: PCT/CN2022/118466
(87) International publication number: WO 2024/026977

(57) **Abstract**

The present application relates to a battery cell (20), a battery (100), and an electrical apparatus. The battery cell comprises a case (22), an electrode assembly (23), and an adjusting assembly (24). In a first direction (X), the adjusting assembly (24) is disposed between the electrode assembly (23) and the case (22) that are adjacent, and/or between two adjacent electrode assemblies (23). The adjusting assembly (24) comprises an elastic portion (24a) and a blocking member (24b) that are connected, the elastic portion (24a) is constructed to be elastically deformable along the first direction (X), and the blocking member (24b) is disposed on a side of the elastic portion (24a) facing the electrode assembly (23).

## Description

### CROSS-REFERENCE

The present application refers to Chinese patent application No. 2022219972965, filed on August 01, 2022 and entitled "BATTERY CELL, BATTERY AND ELECTRICAL APPARATUS", which is incorporated into this application by reference in its entirety.

### TECHNICAL FIELD

The present application relates to the technical field of batteries, and in particular to a battery cell, a battery, and an electrical apparatus.

### BACKGROUND

In battery design, the expansion of an electrode plate is taken into consideration to design a certain space to accommodate an increase in thickness caused by the expansion of an electrode assembly, i.e., group margin design. Group margin refers to a ratio of the actual internal cross-sectional area of a battery cell to the maximum internal cross-sectional area. Taking a wound battery cell as an example, the battery cell is cut off horizontally, and a ratio of the cross-sectional area of each material in a wound electrode assembly to the area contained in the inner diameter of a battery cell case can be used to characterize how easy to put the electrode assembly into the case, a pressure of charging expansion of the electrode assembly upon the case, etc.

Low group margin design can lead to the following problems: the space in a thickness direction is too large during formation, there is untight fitting between electrodes plates, and the electrode plates wrinkle easily, affecting the battery performance. However, the group domain design being too high in turn leads to a greater expansion force of the electrode assembly as expansion of the electrode plates aggravates during a cycle, which have a serious impact on the cycle performance and module structure of the battery cell.

### SUMMARY OF THE INVENTION

In view of this problem, the present application provides a battery cell, a battery, and an electrical apparatus, which can alleviate the problem of reduced battery performance due to too high or too low group margin.

In a first aspect, the present application provides a battery cell, including a case, an electrode assembly, and an adjusting assembly. In a first direction, the adjusting assembly is disposed between the electrode assembly and the case that are adjacent, and/or between two adjacent electrode assemblies. The adjusting assembly includes an elastic portion and a blocking member that are connected, the elastic portion is constructed to be elastically deformable along the first direction, and the blocking member is disposed on a side of the elastic portion facing the electrode assembly.

In the technical solutions of the embodiments of the present application, when the group margin of the battery cell is low, an acting force provided by the elastic portion allows each electrode plate in the electrode assembly to fit more tightly with the separator (equivalent to exerting a clamping force to the electrode assembly), and accordingly, it is possible to alleviate wrinkling of the electrode plates, thus alleviating lithium plating caused by the wrinkling of the electrode plates, and improving the performance of the battery cell. As the battery cell is constantly cycled through charging and discharging, the group margin of the battery cell constantly rises since its electrode assembly constantly expands. At this time, the acting force provided by the elastic portion may slow down the expansion speed of the electrode assembly, thus slowing down the rise in the group margin of the battery cell, which helps improve the cycle performance of the battery cell.

In some embodiments, the blocking member has an abutting face that faces the electrode assembly. At this time, the blocking member is in face abutting with the electrode assembly, and the acting force exerted by the blocking member may be evenly transferred to the electrode assembly. The electrode assembly is uniformly stressed, which helps ensure that all parts of the electrode plates thereof are uniformly stressed and alleviate wrinkling of the electrode plates. At the same time, it is not required for the blocking member to be fixedly connected to the electrode assembly, which simplifies mounting of the adjusting assembly.

In some embodiments, the adjusting assembly disposed between the electrode assembly and the case includes one blocking member. The abutting face of the blocking member faces the electrode assembly, and the other side of the elastic portion facing away from the blocking member is fixedly connected to the case. At this time, stability of a position of the adjusting assembly is ensured by the fixed connection between the case and the elastic portion, and the adjusting assembly is arranged to displace in directions other than a deformation direction when the electrode assembly expands, which helps keep the acting force of the blocking member acting perpendicularly on the electrode assembly. Furthermore, including only one blocking member may reduce material cost.

In some embodiments, the elastic portion includes a spring, and the spring is arranged to deform along the first direction and is fixedly connected to the blocking member. As a commonly used elastic component, the spring has good elastic deformation ability and can provide a reliable acting force.

In some embodiments, each elastic portion includes a plurality of springs, and in a plane perpendicular to the first direction, orthographic projections of all the springs of each adjusting assembly are arranged in spaced manner. At this time, the elastic portion may exert a relatively uniform force to the blocking member, such that the acting force can act uniformly on the electrode assembly, which helps ensure the uniformity of the electrode assembly being stressed.

In some embodiments, the elastic portion includes an elastic colloidal part, the elastic colloidal part is configured to be elastically deformable along the first direction, and the elastic colloidal part is bonded to the blocking member. At this time, connection between the elastic portion and the blocking member is achieved by gluing with the elastic colloidal part, which is simple and convenient.

In some embodiments, each adjusting assembly includes a plurality of elastic colloidal parts, in the same plane perpendicular to the first direction, orthographic projections of the elastic colloidal parts extend along the same direction, and the orthographic projections of all elastic colloidal parts of each adjusting assembly are arranged in spaced manner along a direction intersecting with their own extension directions. At this time, all elastic colloidal parts of each elastic portion may exert a relatively uniform force to the blocking member, such that the acting force can act uniformly on the electrode assembly, which helps ensure the uniformity of the electrode assembly being stressed.

In some embodiments, in each adjusting assembly, in a plane perpendicular to the first direction, a sum of orthographic projection areas of all the elastic colloidal parts is m1, an orthographic projection area of an outer plane of each electrode assembly facing the blocking member is m2, and m1 and m2 satisfy: m1/m2≥1/4. When m1/m2 is within the above range, the elastic colloidal parts can not only firmly connect the blocking member, the electrode assembly and/or the case, but also bring forth good elastic deformation.

In some embodiments, in a plane perpendicular to the first direction, an orthographic projection of the blocking member coincides with an orthographic projection of an outer plane of the electrode assembly opposed thereto facing the blocking member. At this time, the orthographic projection of the blocking member coincides with the orthographic projection of the outer plane of the electrode assembly, and the two may be in face contact/face connection with a sufficient area, and the uniformity of the electrode assembly being stressed is optimal. Furthermore, a linear movement of the blocking member may be guided by the outer plane of the electrode assembly, such that the blocking member moves only in the first direction of the electrode assembly.

In some embodiments, in the first direction, a total length of projections of all the elastic portions in the adjusting assembly is L1, a dimension of the battery cell is L2, and L1 and L2 satisfy: L1/L2≤1/10. At this time, all the elastic portions in the adjusting assembly occupy a small internal space of the battery cell, which helps improve energy density of the battery cell.

In some embodiments, in the first direction, a space between the case and the electrode assembly that are disposed in spaced manner, and a space between two electrode assemblies that are disposed in spaced manner are both a refill space, each adjusting assembly is located in either of the refill spaces, and at least part of the refill spaces is used to accommodate an electrolyte. The blocking member is provided with a through hole, and the through hole is configured to provide an infiltration channel for the electrolyte contained in the refill spaces to infiltrate the electrode assembly disposed opposite to the blocking member. At this time, the electrolyte in the refill spaces may make up for the shortage of the electrolyte in the electrode assembly, avoiding the problem of severe drop in battery life due to insufficient electrolyte in the later stage of using the battery cell.

In some embodiments, there are at least two electrode assemblies included, all of the electrode assemblies are disposed in stacked manner along the first direction, and an adjusting assembly is limited between all the electrode assemblies on at least one side of the first direction and the case. At this time, the electrode assemblies may have the adjusting assembly limited only between them and the case after they are stacked and packaged into a whole, which can simplify the production of the battery cell, speed up the production of the battery cell, and improve production capacity.

In some embodiments, the battery cell further includes an insulating film, and the insulating film encloses all the electrode assemblies. In the first direction, the insulating film is disposed between the electrode assembly and the case. At this time, the insulating film may electrically insulate the case and the electrode assembly to avoid the case leaking electricity.

In some embodiments, in the first direction, the insulating film is disposed between the electrode assembly and the adjusting assembly, and the adjusting assembly is disposed between the insulating film and the case. At this time, the insulating film may avoid causing damage to the electrode assembly due to the blocking member directly contacting the electrode assembly.

In a second aspect, the present application provides a battery, including the battery cell in the above embodiments.

In a third aspect, the present application provides an electrical apparatus, including the battery in the above embodiments, the battery being configured to provide electric energy.

### DESCRIPTION OF DRAWINGS

By reading the detailed description of the preferred implementations below, various other advantages and benefits will become apparent to those of ordinary skill in the art. The drawings are for the purpose of illustrating the preferred implementations only and are not to be considered a limitation to the present application. Moreover, in all of the drawings, the same components are indicated by the same reference numerals. In the drawings:
FIG. 1 is a structural schematic diagram of a vehicle according to some embodiments of the present application;
FIG. 2 is an exploded schematic diagram of a battery according to some embodiments of the present application;
FIG. 3 is an exploded schematic diagram of a battery cell according to some embodiments of the present application;
FIG. 4 is an internal structural schematic diagram of a battery cell according to some embodiments of the present application;
FIG. 5 is a status schematic diagram of the battery cell shown in FIG. 4;
FIG. 6 is a structural schematic diagram of an adjusting assembly of the battery cell shown in FIG. 4;
FIG. 7 is an internal structural schematic diagram of a battery cell according to some other embodiments of the present application;
FIG. 8 is a status schematic diagram of the battery cell shown in FIG. 7;
FIG. 9 is a structural schematic diagram of an adjusting assembly of the battery cell shown in FIG. 7.

Reference numerals in the Detailed Description are as follows:
1000, vehicle; 100, battery; 200, controller; 300, motor; 10, box; 11, first portion; 12, second portion; 20, battery cell; 21, end cover; 21a, electrode terminal; 22, case; 23, electrode assembly; 24, adjusting assembly; 24a, elastic portion; a1, spring; a2, elastic colloidal part; 24b, blocking member; b1, through hole;25, insulating film; 26,electrolyte;X, first direction; S, refill space.

### DETAILED DESCRIPTION

Embodiments of the technical solutions of the present application will be described in detail below with reference to the accompanying drawings. The following embodiments are only used to more clearly illustrate the technical solution of the present application, and therefore are only used as examples and cannot be used to limit the scope of protection of the present application.

Unless otherwise defined, all technical and scientific terms used herein have the same meanings as those commonly understood by those skilled in the art to which the present application pertains to. The terms used herein are for the purpose of describing specific embodiments only, and are not intended to limit the present application. The terms "including" and "having" and any variations thereof in the description and claims of the present application and the aforementioned description of the drawings are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. Moreover, the character "/" herein generally indicates that the context objects are in an "or" relationship.

In the description of the embodiments of the present application, the term "a plurality of" refers to two or more (including two). Similarly, "multiple groups" refers to two or more groups (including two groups), and "multiple pieces" refers to two or more pieces (including two pieces).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated device or element must have a specific orientation, be constructed and operate in a specific orientation, and therefore, cannot be understood as a limitation to the present application.

In the description of the embodiments of the present application, unless otherwise specified and limited, the technical terms "mounting", "connection", "connection" and "fixation" should be understood in a broad sense, for example, they can be fixed connection, detachable connection, or integration; or they can be mechanical connection or electrical connection; or they can be direct connection, indirect connection through an intermediate medium, or communication of the interiors of two elements or the relationship of interaction between two elements. For those of ordinary skill in the art, the specific meanings of the above terms in the embodiments of the present application may be understood according to specific situations.

A battery cell generally includes a case and an electrode assembly located within the case. The electrode assembly is a component capable of electrochemical reactions formed by stacking a positive electrode plate, a separator, and a negative electrode plate. During design of a battery cell, the expansion of an electrode plate is taken into consideration to design a certain space to accommodate an increase in thickness caused by the expansion of an electrode assembly, i.e., group margin design.

The inventors of the present invention have noticed that when the group margin design is low, the space in a thickness direction is too large during formation of the battery cell, there is untight fitting between electrodes plates, and the electrode plates wrinkle easily, affecting the battery performance. However, the group margin design being too high in turn leads to a greater expansion force of the electrode assembly as expansion of the electrode plates aggravates during a cycle, which has a serious impact on the cycle performance and module structure of the battery cell.

Based on the above considerations, in order to alleviate the impact of too high or too low group margin on battery performance, the inventors have designed a battery cell after in-depth research. The battery cell has an adjusting assembly disposed between its case and an electrode assembly, or between electrode assemblies. The electrode assembly is given an acting force to resist its expansion by the adjusting assembly. When the group margin is low, an acting force provided by an elastic portion allows each electrode plate in the electrode assembly fit more tightly with a separator, and accordingly, it is possible to alleviate wrinkling of the electrode plate, thus alleviating lithium plating caused by the wrinkling of the electrode plate, and improving the battery performance. When the group margin is higher, the acting force provided by the elastic portion may slow down the expansion speed of the electrode assembly, thus slowing down the rise in the group margin of the battery cell, which helps improve the cycle performance of the battery cell.

The battery cells disclosed in embodiments of the present application can be used in, but are not limited to, an electrical apparatus, such as a vehicle, a ship, or an aircraft. A battery cell, battery, or the like having the battery disclosed in the present application can be used to form a power supply system for such an electrical apparatus. The electrical apparatus can be, but is not limited to, a mobile phone, a tablet, a laptop, an electric toy, an electric tool, a battery vehicle, an electric vehicle, a ship, a spacecraft, and the like. Among them, the electric toy can include a stationary or mobile electric toy, for example, a game console, an electric car toy, an electric ship toy, and an electric aircraft toy, and the like, and the spacecraft can include an aircraft, a rocket, a space shuttle and a spaceship, and the like.

For the convenience of description in the following embodiments, an electrical apparatus being a vehicle 1000 according to an embodiment of the present application is taken as an example for the description.

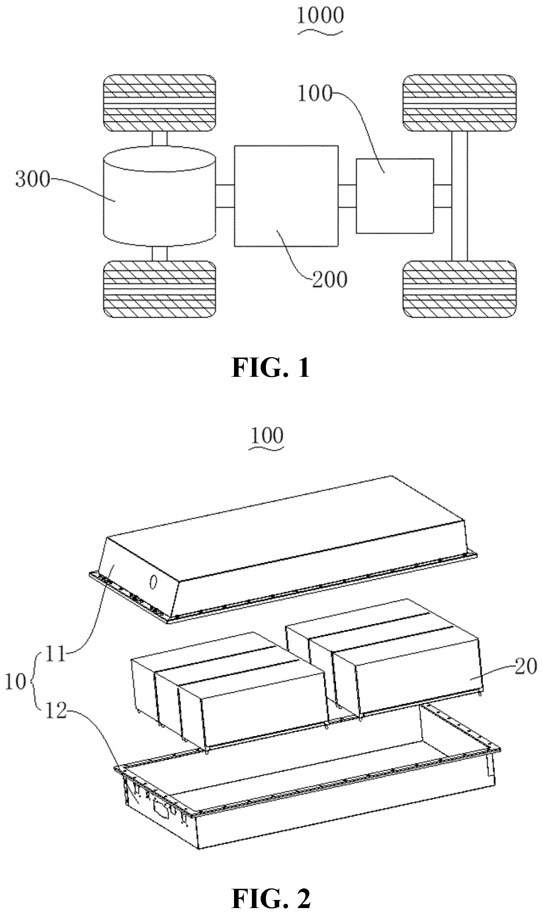

Referring to FIG. 1, FIG. 1 is a structural schematic view of a vehicle 1000 according to some embodiments of the present application. The vehicle 1000 can be a fuel vehicle, a gas vehicle or a new energy vehicle. The new energy vehicle can be an all-electric vehicle, a hybrid vehicle, an extended-range vehicle, or the like. A battery 100 is disposed in the vehicle 1000. The battery 100 can be disposed at the bottom or head or tail of the vehicle 1000. The battery 100 can be used as a power supply for the vehicle 1000, for example, the battery 100 can be used as an operating power source for the vehicle 1000. The vehicle 1000 can further include a controller 200 and a motor 300. The controller 200 is used to control the battery 100 to supply power to the motor 300, for example, to supply power for starting, navigation and driving of the vehicle 1000.

In some embodiments of the present application, the battery 100 can not only be used as the operating power source for the vehicle 1000, but also as a driving power source for the vehicle 1000, to replace or partially replace fuel or natural gas to provide driving power for the vehicle 1000.

Please refer to FIG. 2, FIG. 2 is an exploded view of a battery 100 according to some embodiments of the present application. The battery 100 includes a box 10 and a battery cell 20, and the battery cell 20 is accommodated in the box 10. The box 10 is used to provide an accommodation space for the battery cell 20, and the box 10 can be of various structures. In some embodiments, the box 10 can include a first portion 11 and a second portion 12, the first portion 11 and the second portion 12 covering each other, and the first portion 11 and the second portion 12 together defining the accommodation space for accommodating the battery cell 20. The second portion 12 can be of a hollow structure with an opening at one end, and the first portion 11 can be of a plate-like structure, with the first portion 11 covers the opening side of the second portion 12 such that the first portion 11 and the second portion 12 together define the accommodation space; and the first portion 11 and the second portion 12 can each be of a hollow structure with an opening at one end, with the opening side of the first portion 11 covering the opening side of the second portion 12. Of course, the box 10 formed by the first portion 11 and the second portion 12 can be of a variety of shapes, such as a cylinder, a rectangular solid, or the like.

In the battery 100, there can be a plurality of battery cells 20, and the plurality of battery cells 20 can be connected in series or in parallel or in a mixed connection, with the mixed connection meaning that the plurality of battery cells 20 are connected in both series and parallel. The plurality of battery cells 20 can be directly connected together in series or in parallel or in mixed connection, and then the whole composed of the plurality of battery cells 20 can be accommodated in the box 10; and of course, the battery 100 can also be in the form of a battery module first formed by the plurality of battery cells 20 being connected in series or in parallel or in mixed connection, then multiple battery modules can be connected in series or in parallel or in mixed connection to form a whole, and accommodated in the box 10. The battery 100 can further include other structures, for example, the battery 100 can further include a bus component for enabling an electrical connection between the plurality of battery cells 20.

Each battery cell 20 can be a secondary battery or a primary battery, or can be a lithium-sulfur battery, a sodium-ion battery or a magnesium-ion battery, but is not limited thereto. The battery cell 20 can be cylindrical, flat, rectangular, or in other shapes.

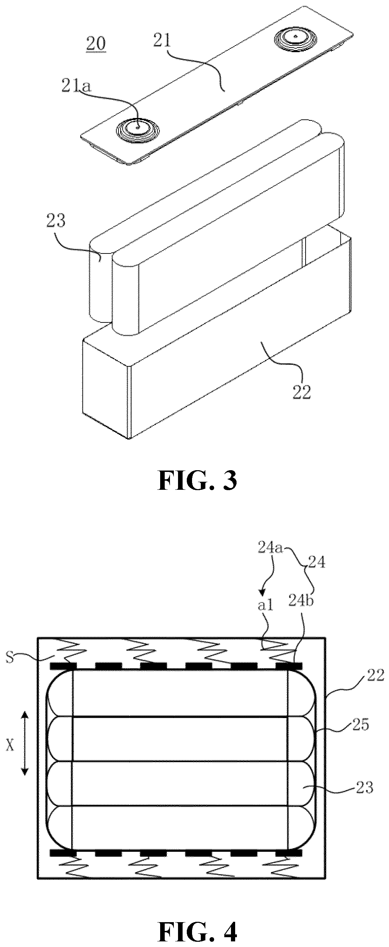

Referring to FIG. 3, FIG. 3 is an exploded structural schematic diagram of a battery cell 20 according to some embodiments of the present application. The battery cell 20 refers to a smallest unit constituting a battery. As shown in FIG. 3, the battery cell 20 includes an end cover 21, a case 22, an electrode assembly 23, and other functional components.

The case 22 forms an opening on one side in a direction of its own height, and the end cover 21 covers at the opening of the case 22 to isolate an internal environment of the battery cell 20 from an external environment. Without limitation, the shape of the end cover 21 can be adaptive to the shape of the case 22 so as to be mate with the case 22. Optionally, the end cover 21 can be made of a material (such as an aluminum alloy) with a certain hardness and strength, and in this way, the end cover 21 is less prone to deforming when pressed and collided, enabling the battery cell 20 to have a higher structural strength, and the safety performance also to be improved. Functional components such as an electrode terminal 21a can be disposed on the end cover 21. The electrode terminal 21a can be used for being electrically connected to the electrode assembly 23 for outputting or inputting electric energy of the battery cell 20. In some embodiments, the end cover 21 can be further provided with a pressure relief mechanism used for relieving internal pressure when the internal pressure or temperature of the battery cell 20 reaches a threshold. The end cover 21 can also be made of various materials, such as copper, iron, aluminum, stainless steel, an aluminum alloy, and plastic. This is not specially limited in the embodiments of the present application. In some embodiments, an insulating member (not shown) can be further arranged on an inner side of the end cover 21, and the insulating member can be used for isolating an electrical connection component in the case 22 from the end cover 21, thereby reducing the risk of short circuit. Exemplarily, the insulating member can be of plastic, rubber, etc.

The case 22 is an assembly for mating with the end cover 21 to form the internal environment of the battery cell 20, where the formed internal environment can be used to accommodate the electrode assembly 23, an electrolyte solution, and other components. The case 22 and the end cover 21 can be separate components, an opening can be arranged in the case 22, and with the opening being covered with the end cover 21 at the opening, the internal environment of the battery cell 20 is formed. Without limitation, the end cover 21 and the case 22 can also be integrated. Specifically, the end cover 21 and the case 22 can form a common connection surface before other components are put in the case. When it is required for an interior of the case 22 to be encapsulated, the case 22 is covered with the end cover 21. The case 22 can be of various shapes and sizes, for example a rectangular solid, a cylinder, a hexagonal prism, etc. Specifically, the shape of the case 22 can be determined according to the specific shape and size of the electrode assembly 23. The case 22 can be made of various materials, e.g., copper, iron, aluminum, stainless steel, an aluminum alloy, plastic etc., which is not particularly limited in this embodiment of the present application.

The electrode assembly 23 is a component in which an electrochemical reaction occurs in the battery cell 20. One or more electrode assemblies 23 can be contained within the case 22. The electrode assembly 23 is mainly formed by winding or stacking a positive electrode plate and a negative electrode plate, and a separator is usually provided between the positive electrode plate and the negative electrode plate. The portions of the positive electrode plate and the negative electrode plate that have active materials constitute a body portion of the electrode assembly, and the portions of the positive electrode plate and the negative electrode plate that do not have active materials each constitute a tab. The positive tab and the negative tab can be located at one end of the body portion together, or located at two ends of the body portion, respectively. In the charging and discharging process of a battery, the positive electrode active material and the negative electrode active material react with the electrolyte solution, and the tabs are connected to the electrode terminals to form a current loop.

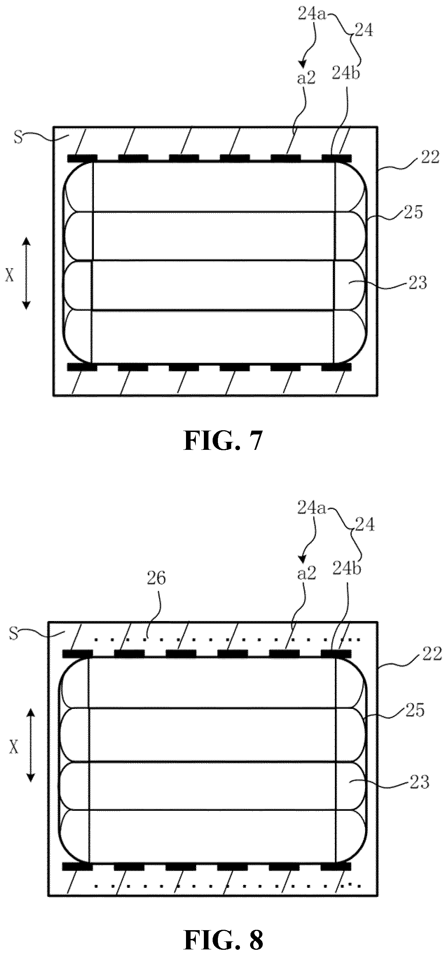

According to some embodiments of the present application, referring to FIG. 4 and FIG. 7, the present application provides a battery cell 20, including a case 22, an electrode assembly 23, and an adjusting assembly 24. In a first direction X, the adjusting assembly 24 is disposed between the adjacent electrode assembly 23 and case 22, and/or between two adjacent electrode assemblies 23. The adjusting assembly 24 includes an elastic portion 24a and a blocking member 24b that are connected, the elastic portion 24a is constructed to be elastically deformable along the first direction X, and the blocking member 24b is disposed on a side of the elastic portion 24a facing the electrode assembly 23.

The case 22 is a component having a certain space formed therein to accommodate the electrode assembly 23. The case 22 may be, but not limited to, a component with an opening at one end in its own height direction, and an internal environment of the battery cell 20 is formed by allowing the end cover 21 to cover at the opening. For the description of the case 22, reference may be made to the above description.

The electrode assembly 23 is a component in which an electrochemical reaction occurs in the battery cell 20. With respect to the construction of the electrode assembly 23, reference may be made to the above recitation, and repeating is omitted here. In practical applications, the first direction X refers to a direction in which the electrode assembly 23 expands outward during charging and discharging. When the electrode assembly 23 is of a laminated structure, the first direction X is consistent with a stacking direction of an electrode plate and a separator. When the electrode assembly 23 is of a wound structure, the first direction X is perpendicular to a direction of its planar outer surface (i.e., an outer plane in the following embodiment). Generally, the first direction X of the electrode assembly 23 corresponds to a thickness direction thereof. In the embodiments shown in FIG. 4 and FIG. 7, the first direction X is disposed along a vertical direction of the drawing.

It may be understood that when only one electrode assembly 23 is included, the adjusting assembly 24 is disposed between the electrode assembly 23 and the case 22. When two or more electrode assemblies 23 are included, in the first direction X, an adjusting assembly 24 is disposed between the adjacent electrode assemblies 23 and the case 22, and/or the adjusting assembly 24 is disposed between two adjacent electrode assemblies 23.

In actual applications, when the number of motor assemblies 23 is two or more, the electrode assemblies 23 may be arranged in one column along the first direction X, and the electrode assemblies 23 may also be arranged in one row along a direction perpendicular to the first direction X, and the specific manner is not limited. When the electrode assemblies 23 are arranged in one column, then in the first direction X, the electrode assemblies 23 at the head/tail end of an array and the case 22 may be disposed in spaced manner (or may be disposed proximately), and the electrode assemblies 23 located in the middle of the array may be disposed adjacently and in spaced manner (or may be contacted adjacently and closely). When the electrode assemblies 23 are arranged in one row, in the first direction X, at least one side of each electrode assembly 23 and the case 22 are disposed in spaced manner. The above is not specifically limited, as long as there are at least one electrode assembly 23 and the case 22 or adjacent electrode assemblies 23 being disposed in spaced manner.

In the first direction X, when the electrode assembly 23 and the case 22 are disposed in spaced manner, then an adjusting assembly 24 is arranged between the electrode assembly 23 and the case 22. In the first direction X, when the electrode assemblies 23 are disposed in spaced manner, then the adjusting assembly 24 is arranged between the adjacent electrode assemblies 23. In the embodiments shown in FIG. 4 and FIG. 7, the electrode assemblies 23 are arranged in one column along the first direction X, and both the electrode assemblies 23 located at the head and tail ends and the case 22 are disposed in spaced manner, and are in close contact with adjacent electrode assemblies 23. An adjusting assembly 24 is arranged between the electrode assemblies 23 and the case 22 that are disposed in spaced manner.

The embodiments shown in FIG. 4 and FIG. 7 only provide some embodiments of the present application and are not intended to limit the solutions of the present application. For example, based on the embodiments shown in FIG. 4 and FIG. 7, the adjacent electrode assemblies 23 are also disposed in spaced manner, and between them, an adjusting assembly 24 is limited.

The blocking member 24b is used to contact and connect with the electrode assembly 23. The blocking member 24b may be a blocking member, a blocking sheet, a blocking block, or the like. The blocking member 24b may be integral, or may each be provided with a plurality of blocking sub-portions, each of which is in contact or connection with the electrode assembly 23. Specifically, the blocking member 24b may be connected to the elastic portion 24a by means of welding, bonding, fastening connection, or the like.

The blocking member 24b may be made of metal or polymer material. Specifically, the blocking member 24b is an aluminum plate or a copper plate, or is a plate member made of a polymer material, e.g. a polyethylene film, a polyethylene terephthalate film, or a polypropylene film. When the blocking member 24b is made of these materials, can be made of the same material as an electrode plate, a separator, an insulating film 25 in the battery cell 20 and will not react with the electrolyte 26, and thus it is possible to avoid the unknown risks caused by using other materials not used in the battery cell 20.

It may be understood that the blocking member 24b is disposed at one end or both ends of the elastic portion 24a in a deformation direction. The blocking member 24b is disposed at one end of the elastic portion 24a in the deformation direction, that is, one blocking member 24b is included, the blocking member 24b is in contact or connection with the electrode assembly 23, and the elastic portion 24a is connected to the case 22 or another electrode assembly 23. The blocking members 24b are disposed at both ends of the elastic portion 24a in the deformation direction, that is, two blocking members 24b are included, and the two blocking members 24b are in contact or connection with two electrode assemblies 23 or with one electrode assembly 23 and the case 22, respectively.

In a charging and discharging process of the battery cell 20, an electrode plate of the electrode assembly 23 expands, such that the electrode assembly 23 expands as a whole along its first direction X. In the expansion process, the electrode assembly 23 exerts upon the elastic portion 24a an expansion force compressing the elastic portion 24a through the blocking member 24b, and the elastic portion 24a reacts to the electrode assembly 23 through the blocking member 24b to resist its expansion.

When the group margin of the battery cell 20 is low, an acting force provided by the elastic portion 24a allows each electrode plate in the electrode assembly 23 to fit more tightly with the separator (equivalent to exerting a clamping force to the electrode assembly 23), and accordingly, it is possible to alleviate wrinkling of the electrode plates, thus alleviating lithium plating caused by the wrinkling of the electrode plates, and providing the performance of the battery cell 20. As the battery cell 20 is constantly cycled through charging and discharging, the group margin of the battery cell 20 constantly increases since its electrode assembly 23 constantly expands. At this time, the acting force provided by the elastic portion 24a may slow down the expansion speed of the electrode assembly 23, thus slowing down the rise in the group margin of the battery cell 20, which helps improve the cycle performance of the battery cell 20.

In some embodiments, the blocking member 24b has an abutting face that faces away from the elastic portion 24a in the first direction.

The abutting face of the blocking member 24b is disposed facing away from the elastic portion 24a in the first direction X. The blocking member 24b may abut against the opposite face of the electrode assembly 23 via its abutting face. In some embodiments, different from the embodiments shown in FIG. 4 to FIG. 7, the insulating film 25 may not be disposed between the electrode assembly 23 and the blocking member 24b, such that the electrode assembly 23 is in direct face contact with the abutting face of the blocking member 24b. Of course, in the embodiments shown in FIG. 4 to FIG. 7, the abutting face of the blocking member 24b may be in face contact with the insulating film 25.

The acting force exerted by the blocking member 24b on the electrode assembly 23 may be uniformly transferred to the electrode assembly 23 directly or indirectly through its abutting face. The electrode assembly 23 is uniformly stressed, which helps ensure that all parts of the electrode plate thereof are uniformly stressed and the electrode plate has better wrinkle resistance. At the same time, it is not required for the blocking member 24b to be fixedly connected to the electrode assembly 23, which simplifies mounting of the adjusting assembly 24.

In some embodiments, referring to FIG. 4 and FIG. 7, the adjusting assembly 24 disposed between the electrode assembly 23 and the case 22 includes one blocking member 24b. The abutting face of the blocking member 24b faces the electrode assembly 23, and the other side of the elastic portion 24a facing away from the blocking member 24b is fixedly connected to the case 22.

The adjusting assembly 24 disposed between the electrode assembly 23 and the case 22 is referred to as a first adjusting assembly 24. The first adjusting assembly 24 includes only one blocking member 24b. The abutting face of the blocking member 24b faces the electrode assembly 23, and the elastic portion 24a is fixedly connected to the case 22. Specifically, the elastic portion 24a and the case 22 may be fixedly connected by means of bonding, welding, or the like.

At this time, stability of a position of the adjusting assembly 24 is ensured by the fixed connection between the case 22 and the elastic portion 24a, avoiding the adjusting assembly 24 displacing in directions other than the first direction X when the electrode assembly 23 expands, which helps keep the acting force of the blocking member 24b acting perpendicularly on the electrode assembly 23. Furthermore, including only one blocking member 24b may reduce material cost.

Of course, in other embodiments, the first adjusting assembly 24 may also include two blocking members 24b, and the two blocking members 24b are fixedly connected to two ends of the elastic portion 24a, respectively. The abutting face of one of the blocking members 24b is in face contact with the electrode assembly 23 or the insulating film 25, and the abutting face of the other blocking member 24b is fixedly connected/face abutted to the case 22.

Additionally, the adjusting assembly 24 disposed between the two electrode assemblies 23 is referred to as a second adjusting assembly 24. The number of the blocking members 24b in the second adjusting assembly 24 may be two, and the two blocking members 24b abut against one electrode assembly 23/insulating film 25, respectively. Of course, the number of the blocking members 24b in the second adjusting assembly 24 may also be one. The number, connection manner etc. of the blocking members 24b in the adjusting assembly 24 are not specifically limited in this application.

In some embodiments, referring to FIG. 4, the elastic portion 24a includes a spring a1, and the spring a1 is arranged to deform along the first direction X and is fixedly connected to the blocking member 24b. As a commonly used elastic component, the spring a1 has good elastic deformation ability and can provide a reliable acting force.

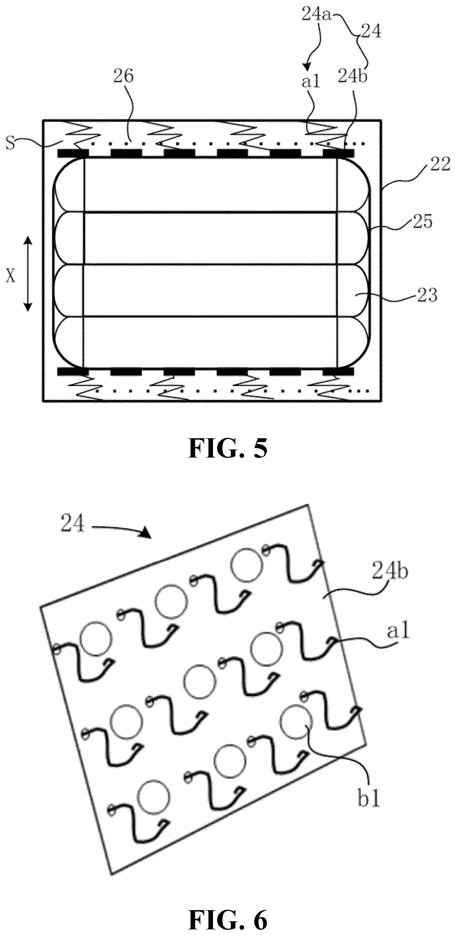

In some embodiments, referring to FIG. 4 and FIG. 6, each elastic portion 24a includes a plurality of springs a1, and in a plane perpendicular to the first direction X, orthographic projections of all the springs a1 of each adjusting assembly 24 are arranged in spaced manner.

Taking the embodiment shown in FIG. 6 as an example, the plane perpendicular to the first direction X is parallel to a plane where the blocking member 24b is located. In this plane, "plane perpendicular to the first direction X", a height direction of the battery cell 20 corresponds to a first side length direction of the blocking member 24b, and a thickness direction of the battery cell 20 corresponds to a second side length direction of the blocking member 24b intersecting with the first side length direction. Without limitation, the plurality of springs a1 included in each adjusting assembly 24 may be distributed in spaced manner in an m*n array along the height direction of the battery cell 20 and the thickness direction of the battery cell 20, where m≥1, n≥2, and are both positive integers, m is the number of the springs a1 included in each column of springs a1 parallel to the height direction of the battery cell 20, and n is the number of the springs a1 included in each row of springs a1 parallel to the thickness direction of the battery cell 20.

At this time, each elastic portion 24a includes a plurality of springs a1, and the springs a1 are arranged in spaced manner to connect the blocking member 24b. The elastic portion 24a may exert a relatively uniform force to the blocking member 24b, such that the acting force can act uniformly on the electrode assembly 23, which helps ensure the uniformity of the electrode assembly 23 being stressed.

In some embodiments, referring to FIG. 7, the elastic portion 24a includes an elastic colloidal part a2, the elastic colloidal part a2 is configured to be elastically deformable along the first direction X, and the elastic colloidal part a2 is bonded to the blocking member 24b.

The elastic colloidal part a2 may be constructed with an elastic adhesive. The elastic adhesive refers to an adhesive that can form an elastomer after curing. The elastic adhesive is of types, e.g. a polyurethane adhesive, a silicone adhesive, a rubber adhesive, etc., which may coat the blocking member 24b by means of coating, then bonded to the electrode assembly 23 or the case 22, and then cured to form an elastomer. The elastic colloidal part a2 is formed with the elastic adhesive. The elastic colloidal part a2 is not only elastic, but also can allow for simultaneous fixed connection to the blocking member 24b as well as to the electrode assembly 23 or the case 22. Two purposes are served, and usage of the adjusting assembly 24 is simpler.

Of course, the elastic colloidal part a2 may also be a finished rubber member, a silicone member, or other elastic members, and then bonded to the blocking member 24b by means of bonding. It is understandable that connection by means of bonding may also be employed between the elastic colloidal part a2 and the case 22 and electrode assembly 23.

At this time, connection between the elastic portion 24a and the blocking member 24b is achieved by gluing with the elastic colloidal part a2, which is simple and convenient.

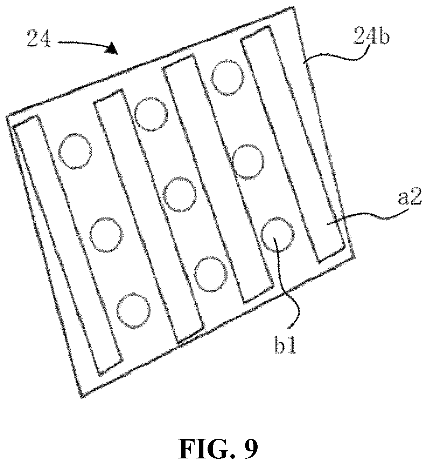

In some embodiments, referring to FIG. 9, each adjusting assembly 24 includes a plurality of elastic colloidal parts a2, in the same plane perpendicular to the first direction X, orthographic projections of the elastic colloidal parts a2 extend along the same direction, and the orthographic projections of all the elastic colloidal parts a2 of each adjusting assembly 24 are arranged in spaced manner along a direction intersecting with their own extension directions.

Taking the embodiment shown in FIG. 7 as an example, the plane perpendicular to the first direction X is parallel to a plane where the blocking member 24b is located. In this plane, "plane perpendicular to the first direction X", a height direction of the battery cell 20 corresponds to a first side length direction of the blocking member 24b, and a thickness direction of the battery cell 20 corresponds to a second side length direction of the blocking member 24b intersecting with the first side length direction. Without limitation, the plurality of elastic colloidal parts a2 included in each adjusting assembly 24 may extend along the height direction of the battery cell 20 and be distributed in spaced manner along the thickness direction of the battery cell 20.

At this time, all elastic colloidal parts a2 of each elastic portion 24a may exert a relatively uniform force to the blocking member 24b, such that the acting force can act uniformly on the electrode assembly 23, which helps ensure the uniformity of the electrode assembly 23 being stressed.

Of course, in other embodiments, the elastic portion 24a may also include the above spring a1 and the above elastic colloidal part a2 to achieve elastic deformation capability.

In some embodiments, in each adjusting assembly 24, in a plane perpendicular to the first direction X, a sum of orthographic projection areas of all the elastic colloidal parts a2 is m1, an orthographic projection area of an outer plane of each electrode assembly 23 facing the blocking member 24b is m2, and m1 and m2 satisfy: m1/m2≥1/4.

The outer plane of the electrode assembly 23 facing the blocking member 24b refers to a planar outer surface of the electrode assembly 23 that is located in the first direction X for face contact/face connection with the blocking member 24b. Taking the wound electrode assembly 23 as an example, an outer surface of the wound electrode assembly 23 includes a large face located in the middle and occupying most of the area and arc faces located on both sides of the large face and in arc shape. The large face is a plane, that is, the outer plane referred to in this application, which can be face contacted/face connected with the blocking member 24b. Taking the laminated electrode assembly 23 as an example, the outer plane is constructed with a plane where the outermost electrode plate/separator is located.

The larger the orthographic projection area m1 of the elastic colloidal part a2, the larger the coating area, and the better the bonding effect. Specifically, a ratio of m1/m2 may be 1/4, 1/3, 1/2, 2/3, 4/5, etc., without specific limitation.

When m1/m2 is within the above range, the elastic colloidal parts a2 can not only firmly connect the blocking member 24b, the electrode assembly 23 and/or the case 22, but also bring forth good elastic deformation.

In some embodiments, in a plane perpendicular to the first direction X, an orthographic projection of the blocking member 24b coincides with an orthographic projection of an outer plane of the electrode assembly 23 opposed thereto facing the blocking member 24b.

As described above, the outer plane of the electrode assembly 23 is a planar outer surface for face contact/face connection with the blocking member 24b.

At this time, the orthographic projection of the blocking member 24b coincides with the orthographic projection of the outer plane of the electrode assembly 23, and the two may be in face contact/face connection with a sufficient area, and the uniformity of the electrode assembly 23 being stressed is optimal. Furthermore, a linear movement of the blocking member 24b may be guided by the outer plane of the electrode assembly 23, such that the blocking member 24b can move only in the first direction X of the electrode assembly 23.

In some embodiments, in the first direction X, a total length L1 of projections of all the elastic portions 24a in the adjusting assembly 24 is L1, a dimension of the battery cell 20 is L2, and L1 and L2 satisfy: L1/L2≤1/10.

In the first direction X, the total length of all the elastic portions 24a in the adjusting components 24 refers to a total length of all the elastic portions 24a in the first direction X as projected in a plane parallel to the first direction X.

Taking the embodiments shown in FIG. 4 and FIG. 7 as examples, the adjusting assembly 24 includes two first adjusting assemblies 24, and the total length of the projections of the elastic portions 24a is a sum of projection lengths of the elastic portions 24a in the two first adjusting assemblies 24. If, based on the embodiments shown in FIG. 4 and FIG. 7, an adjusting assembly 24 (a second adjusting assembly 24) is also disposed between the adjacent electrode assemblies 23, then a total length of the elastic portions 24a is a sum of lengths of the elastic portions 24a in the two first adjusting assemblies 24 and lengths of the elastic portions 24a of all the second adjusting assemblies 24.

A dimension of the battery cell 20 in the first direction X is a thickness of the battery cell 20. Specifically, a ratio of L1/L2 may be 1/10, 1/11, 1/12, 1/13, 1/15, etc.

When L1/L2≤1/10, all the elastic portions 24a in the adjusting assembly 24 occupy a small internal space of the battery cell 20, which helps improve energy density of the battery cell 20.

In some embodiments, L1 satisfies: 1 mm≤L1≤10 mm. Specifically, a value of L1 may be 1 mm, 2 mm, 3 mm, 4 mm, 5 mm, 6 mm, 7 mm, 8 mm, 9 mm, or 10 mm. At this time, all the elastic portions 24a in the adjusting assembly 24 occupy a small internal space of the battery cell 20, and the battery cell 20 has high energy density.

In some embodiments, in the first direction X, a space between the case 22 and the electrode assembly 23 that are disposed in spaced manner, and a space between two electrode assemblies 23 that are disposed in spaced manner are both a refill space S, each adjusting assembly 24 is located in either of the refill spaces S, and at least part of the refill spaces S is used to accommodate an electrolyte 26. The blocking member 24b is provided with a through hole b1, and the through hole b1 is configured to provide an infiltration channel for the electrolyte 26 contained in the refill spaces S to infiltrate the electrode assembly 23 disposed opposite to the blocking member 24b.

It may be understood that the through hole b1 penetrates and connects the refill space S and the electrode assembly 23, such that the electrolyte 26 can enter an interior of the electrode assembly 23 via itself. Specifically, the through hole b1 may penetrate the blocking member 24b along the thickness direction (parallel to the first direction X) of the blocking member 24b.

As shown in the embodiments of FIG. 5 and FIG. 8, the refill space S formed by the case 22 and the electrode assembly 23 in spaced manner is filled with the electrolyte 26 within. When adjacent electrode assemblies 23 are disposed in spaced manner, the refill space S formed therebetween may also be filled with the electrolyte 26 within.

It is possible that only part of the refill space S contains the electrolyte 26, or that the entire refill space S contains the electrolyte 26, without specific limitation.

In a charging and discharging process of the battery cell 20, when the electrolyte 26 in the electrode assembly 23 is insufficient, the electrolyte 26 in the refill space S can infiltrate to the interior of the electrode assembly 23 via the through hole b1 in the blocking member 24b, in such a way, it is possible to compensate for the shortage of the electrolyte 26 in the electrode assembly 23 and avoid the problem of a serious drop in the battery life due to insufficient electrolyte 26 in the later stage of using the battery cell 20.

In some embodiments, referring to FIGS. 4, 5, 7, and 8, there are at least two electrode assemblies 23 included, all of the electrode assemblies 23 are disposed in stacked manner along the first direction X, and an adjusting assembly 24 is limited between all the electrode assemblies 23 on at least one side of the first direction X and the case 22.

In order to increase the electric capacity of the battery cell 20, two or more electrode assemblies 23 may be disposed in the interior of the battery cell 20. In this embodiment, the electrode assemblies 23 are stacked along the first direction X, and two adjacent electrode assemblies 23 are in contact with each other without the adjusting assembly 24 being provided therebetween. Electrode assemblies 23, on one or both sides of the first direction X, of all the electrode assemblies 23 and the case 22 are disposed in spaced manner, and an adjusting assembly 24 is disposed between the case 22 and the electrode assemblies 23 that are spaced, and the adjusting assembly 24 is utilized to resist expansion of all electrode assemblies 23.

In the embodiments shown in FIG. 4 and FIG. 7, an adjusting assembly 24 is limited between the electrode assemblies 23, on each side of the first direction X, of all the electrode assemblies 23 and the case 22, so that all the electrode assemblies 23 are more uniformly stressed, and the effect of resisting the expansion of the electrode assemblies 23 is better and the effect of preventing the electrode plates from wrinkling is better.

In other embodiments, when an adjusting assembly 24 is limited between the electrode assemblies 23 on only one side and the case 22, the electrode assemblies 23 on the other side may be in direct contact with the case 22, and resistance to the expansion of the electrode assembly is achieved with mating between the case 22 and the adjusting assemblies 24.

At this time, the electrode assemblies 23 may have the adjusting assembly 24 limited only between them and the case 22 after they are stacked and packaged into a whole, which can simplify the production of the battery cell 20, speed up the production of the battery cell 20, and improve production capacity.

In some embodiments, the battery cell 20 further includes an insulating film 25, and the insulating film 25 encloses all the electrode assemblies 23. In the first direction X, the insulating film 25 is disposed between the case 22 and the electrode assemblies 23.

The insulating film 25 may be a polyethylene film, a polyethylene terephthalate film, a polypropylene film, or the like. Generally, the case 22 is a metal case such as an aluminum case, which is prone to electricity leakage when in contact with the electrode assembly 23. The insulating film 25 may electrically insulate the case 22 from the electrode assembly 23.

In some embodiments, in the first direction X, the insulating film 25 is disposed between the electrode assembly 23 and the adjusting assembly 24, and the adjusting assembly 24 is disposed between the insulating film 25 and the case 22.

At this time, the acting force exerted by the blocking member 24b acts on the electrode assembly 23 through the insulating film 25, which may avoid causing damage to the electrode assembly 23 due to the blocking member 24b directly contacting the electrode assembly 23.

In one embodiment of the present application, the battery cell 20 includes a case 22, a plurality of electrode assemblies 23, two adjusting assemblies 24, and an insulating film 25. The insulating film 25 encloses all the electrode assemblies 23 and is accommodated within the case 22. One adjusting assembly 24 is limited between each side, in the first direction X, of the insulating film 25 and the case 22. The adjusting assembly 24 includes an elastic portion 24a and one blocking member 24b that are connected. The blocking member 24b is in face abutting with the insulating film 25, and the elastic portion 24a is fixedly connected to the case 22.

In another aspect, an embodiment of the present application further provides a battery 100, including a battery cell 20 as described above.

In another aspect, an embodiment of the present application further provides an electrical apparatus, including a battery 100 as described above, the battery 100 being used to provide electrical energy.

The technical features of the above-mentioned embodiments can be combined arbitrarily. In order to make the description concise, not all possible combinations of the technical features in the above embodiments are described. However, all the combinations of the technical features should be considered as falling within the scope described in the specification provided that they do not conflict with each other.

The above-mentioned embodiments only describe several embodiments of the present application, and the description thereof is specific and detailed, but cannot therefore be understood as a limitation on the patent scope of the present application. It should be noted that those of ordinary skill in the art may further make variations and improvements without departing from the concept of the present application, all of which fall within the scope of protection of the present application. Therefore, the patent protection scope of the present application should be subject to the appended claims.

## Claims

1. A battery cell, comprising:
a case;
an electrode assembly accommodated within the case; and
an adjusting assembly, the adjusting assembly being disposed in a first direction between the electrode assembly and the case that are adjacent, and/or between two adjacent electrode assemblies;
wherein the adjusting assembly comprises an elastic portion and a blocking member that are connected, the elastic portion is configured to be elastically deformable along the first direction, and the blocking member is disposed on a side of the elastic portion facing the electrode assembly.

2. The battery cell according to claim 1, wherein the blocking member has an abutting face that faces away from the elastic portion in the first direction.

3. The battery cell according to claim 2, wherein the adjusting assembly disposed between the electrode assembly and the case comprises one blocking member;
the abutting face of the blocking member is arranged facing the electrode assembly, and the other side of the elastic portion facing away from the blocking member is fixedly connected to the case.

4. The battery cell according to any one of claims 1-4, wherein the elastic portion comprises a spring, and the spring is arranged to deform along the first direction and is fixedly connected to the blocking member.

5. The battery cell according to claim 4, wherein each adjusting assembly includes a plurality of springs, and in a plane perpendicular to the first direction, orthographic projections of all the springs of each adjusting assembly are arranged in spaced manner.

6. The battery cell according to any one of claims 1-5, wherein the elastic portion comprises an elastic colloidal part, the elastic colloidal part is configured to be elastically deformable along the first direction, and the elastic colloidal part is bonded to the blocking member.

7. The battery cell according to claim 6, wherein each adjusting assembly comprises a plurality of elastic colloidal parts, in a plane perpendicular to the first direction, orthographic projections of the elastic colloidal parts extend along the same direction, and orthographic projections of all the elastic colloidal parts of each adjusting assembly are arranged in spaced manner along a direction intersecting with their own extension directions.

8. The battery cell according to claim 7, wherein in each adjusting assembly, in a plane perpendicular to the first direction, a sum of areas of orthographic projections of all the elastic colloidal parts is m1, an area of an orthographic projection of an outer plane of each electrode assembly facing the blocking member is m2, and the m1 and the m2 satisfy: m1/m2≥1/4.

9. The battery cell according to any one of claims 1-8, wherein in a plane perpendicular to the first direction, an orthographic projection of the blocking member coincides with an orthographic projection of an outer plane of the electrode assembly opposed thereto facing the blocking member.

10. The battery cell according to any one of claims 1-8, wherein in the first direction, a total length of projections of all the elastic portions in the adjusting assembly is L1, a dimension of the battery cell is L2, and the L1 and the L2 satisfy: L1/L2≤1/10.

11. The battery cell according to claim 10, wherein the L1 satisfies: 1 mm≤L1≤10 mm.

12. The battery cell according to any one of claims 1-10, wherein in the first direction, a space between the case and the electrode assembly that are disposed in spaced manner, and a space between two electrode assemblies that are disposed in spaced manner are both a refill space, each adjusting assembly is located in either of the refill spaces, and at least part of the refill spaces is used to accommodate an electrolyte;
the blocking member is provided with a through hole, and the through hole is configured to provide an infiltration channel for the electrolyte contained in the refill spaces to infiltrate the electrode assembly disposed opposite to the blocking member.

13. The battery cell according to any one of claims 1-12, wherein there are at least two electrode assemblies included, and all of the electrode assemblies are disposed in stacked manner along the first direction;
the adjusting assembly is arranged between all the electrode assemblies on at least one side of the first direction and the case.

14. The battery cell according to any one of claims 1-13, wherein the battery cell further comprises an insulating film, and the insulating film encloses all the electrode assemblies; and
in the first direction, the insulating film is disposed between the electrode assembly and the case.

15. The battery cell according to claim 14, wherein in the first direction, the insulating film is disposed between the electrode assembly and the adjusting assembly, and the adjusting assembly is disposed between the insulating film and the case.

16. A battery, comprising the battery cell according to any one of claims 1-15.

17. An electrical apparatus, comprising the battery according to claim 16, the battery being used to provide electric energy.
